# EUROPEAN PATENT APPLICATION

(11) **EP 4 438 565 A1**
(43) Date of publication of application: **02.10.2024**
(21) Application number: 23904824.2
(22) Date of filing: 31.03.2023
(51) Int. Cl.: C01G 53/04, C01B 32/168, H01M 4/36, H01M 4/52, H01M 4/583, H01M 4/62, H01M 10/36, B82Y 30/00, B82Y 40/00

(54) **NICKEL OXYHYDROXIDE/CARBON NANOTUBE COMPLEX SERVING AS AQUEOUS MAGNESIUM ION POSITIVE ELECTRODE MATERIAL, AND PREPARATION METHOD THEREFOR AND USE THEREOF**

(30) Priority: 17.01.2023 CN 202310066012
(71) Applicant: Suzhou Institute of Nano-Tech and Nano-Bionics (SINANO), Chinese Academy of Sciences, Suzhou, Jiangsu 215123 (CN)
(72) Inventor: ZHANG, Qichong, Suzhou, Jiangsu 215123 (CN); LING, Ying, Suzhou, Jiangsu 215123 (CN); HE, Bing, Suzhou, Jiangsu 215123 (CN)
(74) Representative: Bayramoglu et al.
(86) International application number: PCT/CN2023/085326
(87) International publication number: WO 2024/152461

(57) **Abstract**

The present application provides a nickel oxyhydroxide/carbon nanotube composite for a water-based magnesium ion positive electrode material, and a preparation method and use thereof. In this approach, carbon nanotubes serve as substrates onto which nickel oxyhydroxide particles are grown via a chemical bath method, yielding the desired composite. By employing this technique, nickel oxyhydroxide nanoparticles are synthesized directly on the surface of carbon nanotubes through a simple chemical bath process, resulting in the formation of a composite structure. This composite material, utilized as a cathode electrode in water-based magnesium ion batteries, exhibits outstanding electrochemical performance, particularly in terms of cycling stability and magnesium ion storage capacity.

## Description

The present application is based on and claims the priority of Chinese patent application No. 202310066012.3 filed on January 17, 2023 and entitled "NICKEL OXYHYDROXIDE/CARBON NANOTUBE COMPOSITE OF WATER-BASED MAGNESIUM ION POSITIVE ELECTRODE MATERIAL, AND PREPARATION METHOD AND USE THEREOF".

### TECHNICAL FIELD

The present application relates to the technical field of inorganic nanomaterials, and in particular to a nickel oxyhydroxide/carbon nanotube composite for a water-based magnesium ion positive electrode material, and a preparation method and use thereof.

### BACKGROUND

In recent years, energy storage, as an intermediate step to realize comprehensive, clean and efficient utilization of energy, has been widely concerned by researchers of various countries in the world. This is particularly evident with the increasing integration of random and fluctuating renewable energy sources into the grid and the widespread adoption of interactive devices such as electric vehicles and distributed power sources. As a result, power systems are transitioning towards a higher proportion of renewable energy and greater electronation. Energy storage technology plays a pivotal role in achieving load balancing in this evolving power landscape. Traditional energy storage systems, such as supercapacitors, lithium-ion batteries, and flow batteries, though widely used, face challenges including potential safety hazards and high costs. Hence, the emergence of water-based batteries offers a timely solution. Magnesium, with its abundant resources, affordability, and safety attributes, stands out among many water-based battery options. Water-based magnesium ion batteries offer advantages such as environmental friendliness, cost-effectiveness, and safety. They utilize a multi-electron transfer pathway during charge and discharge cycles, positioning them as key players in the next generation of energy storage devices. However, challenges persist in forming intercalated compounds due to the small volume, high charge density, and strong polarization of magnesium ions. This limits the choice of cathode electrode materials for magnesium ion batteries and adversely affects the diffusion kinetic properties of magnesium ions in most electrode materials. Consequently, this hampers the transport capacity of magnesium ions within electrode materials, impacting the rate performance of the batteries and making it challenging to achieve theoretical capacity and ideal rate performance. Hence, research and development efforts focusing on cathode electrode materials are crucial for the advancement and application of water-based magnesium ion batteries.

Currently, the primary focus of research on cathode electrode materials revolves around identifying materials that facilitate the reversible intercalation/deintercalation of magnesium ions during charge and discharge cycles while maintaining stability in an electrolyte solution.

Alkaline electrolytes typically exhibit corrosive properties, which can corrode metal-based anodes and compromise electrochemical stability. Additionally, electrolyte solution leakage poses significant safety concerns, thereby impeding large-scale application. In contrast, neutral batteries have emerged as the preferred option among water-based batteries due to their exceptional safety profile and low corrosiveness. On the other hand, among many positive electrode materials, transition metal oxides, e.g., manganese-based and vanadium-based transition metal oxides, are the main research objects because of their advantages of low cost and high capacity. Nickel-based compounds are rarely used as positive electrode materials for batteries, especially as water-based magnesium ion positive electrode materials, because of the high conversion potential between divalent nickel ions and trivalent nickel ions and the low window of electrochemical stability in water-based electrolytes. Generally, nickel-based compounds are used as negative electrode materials for lithium batteries, and as commonly used positive electrode materials for nickel-based batteries, they have the advantages of easily available raw materials, low price and environmental friendliness, and are one of the most widely studied positive electrode materials for nickel-based batteries. However, during charging and discharging, a negative electrode material will be continuously deposited on the surface of a nickel hydroxide positive electrode, blocking a mass transfer channel of a liquid phase, poisoning the positive electrode and causing battery failure. This makes it has the disadvantages of low specific capacity, poor cycling stability and low utilization rate for serving as the positive electrode material of the nickel-based batteries. Especially when it is used as the positive electrode material of the water-based magnesium ion batteries, nickel-based compounds cannot be used as positive electrode materials to be applied in the water-based magnesium ion batteries because of the disadvantages of magnesium ions of a small volume, high charge density, formation of intercalated compounds, and the like.

Wang Xiaofeng et al. in "Electrochemical Capacitor Using Nickel Oxide/Carbon Nanotube Composites Electrode", Journal of Inorganic Chemistry Vol. 18, No.2, 2003.3, discloses a composite electrode obtained by depositing nickel oxide on the surface of carbon nanotubes by an electrochemical method. The supercapacitor based on this composite electrode has good reversibility and improves the performance of nickel oxide. Chinese invention patent CN103131211A discloses a carbon nanotube-lithium-titanium doped nickel oxide compound and a preparation method thereof. The compound obtained by grafting a lithium-titanium doped nickel oxide through a method of carboxylation of the surface of carbon nanotubes is adopted to prepare a material with both high dielectric constant and low dielectric loss. However, the technologies disclosed above all have the problems of complicated processing technology and high production cost.

### SUMMARY

The present application discloses a nickel oxyhydroxide/carbon nanotube composite for a water-based magnesium ion positive electrode material, and a preparation method and use thereof. The nickel oxyhydroxide/carbon nanotube composite is obtained by compounding a high-valent nickel-based compound as a water-based magnesium ion positive electrode material with carbon nanotubes. Its preparation method is mild, simple to operate, safe and environmentally friendly, stable in structure and excellent in electrochemical performance.

In order to achieve the aforementioned purpose, the present application provides the following technical solutions. A method for preparing a nickel oxyhydroxide/carbon nanotube composite for a water-based magnesium ion positive electrode material, includes: taking a carbon nanotube as a substrate, and growing a nickel oxyhydroxide particle on a surface of the carbon nanotube by a chemical bath method to prepare the nickel oxyhydroxide/carbon nanotube composite. By adopting this method, nickel oxyhydroxide is evenly distributed on the surface of the carbon nanotube, so as to form the nickel oxyhydroxide/carbon nanotube composite. Preferably, the process steps of the chemical bath method include:
S1. mixing nickel sulfate hexahydrate, potassium persulfate and deionized water, and stirring at a constant speed to form a homogeneous seed layer solution;
S2. adding ammonia water into the seed layer solution dropwise, and stirring at a constant speed until the reaction is complete, so as to obtain a precursor solution; and
S3. adding the carbon nanotube into the precursor solution, stirring at a constant speed, reacting for 20-30 min, and then drying to obtain the nickel oxyhydroxide/carbon nanotube composite. The carbon nanotube is pretreated before use, including washing the carbon nanotube with water and/or an ethanol solution, and drying in an air blast drying oven at 50-70°C for 30-60 min.

In the aforementioned steps, bivalent nickel is oxidized into trivalent nickel with high valence by potassium persulfate as a strong oxidant, and the trivalent nickel is converted into nickel oxyhydroxide under alkaline conditions and then deposited on the surface of the carbon nanotube through hydrogen bonding to form the nickel oxyhydroxide/carbon nanotubes composite.

Preferably, in the S 1, a mass ratio of nickel sulfate hexahydrate to potassium persulfate in the seed layer solution is (7-8):(3-4).

Preferably, in the precursor solution obtained in the S2, a concentration of the ammonia water added is 28 wt%, and a volume ratio of the ammonia water to the seed layer solution is 1:10-30.

Preferably, in S3, after the reaction is ended, a drying process comprises placing the carbon nanotube in an air blast drying oven at 50-70°C for 30-90 min to obtain the nickel oxyhydroxide/carbon nanotube composite.

Preferably, in the S1-S3, reaction conditions are a temperature of 25-35°C; and a rotating speed of the stirring at a constant speed of 500-1,000 rpm.

In general, the nickel oxyhydroxide in the nickel-based compound can be widely applied for energy storage and conversion as an alkaline electrolyte electrode material. The nickel oxyhydroxide is a common inorganic compound with a layered structure among nickel-based compounds, which has the advantages of a simple preparation process, low toxicity and high redox activity. The nickel oxyhydroxide is converted from nickel hydroxide by oxidative dehydrogenation, and there are many oxygen vacancies and defects in it, which is beneficial to provide reactive sites, increase the adsorption capacity of hydrated magnesium ions, and provide sufficient reactive activity for the intercalating of magnesium ions. Furthermore, the defects and vacancies in the nickel oxyhydroxide are also beneficial to composite with the carbon substrate with poor hydrophilicity, thereby increasing the conductivity of the composite material and further improving the reaction kinetic rate.

For the nickel oxyhydroxide/carbon nanotube composite prepared by the aforementioned technical solution in the present application, the carbon nanotube is adopted as the substrate, the nickel oxyhydroxide particle is grown on the surface of the carbon nanotube by a chemical bath method based on a high-valent nickel-based compound as the seed layer to prepare the nickel oxyhydroxide/carbon nanotube composite, and the nickel oxyhydroxide is uniformly distributed on the surface of the carbon nanotube. In the present application, the low-valent nickel is converted into a stable high-valent nickel-based compound by adopting a strong oxidant, the prepared nickel oxyhydroxide/carbon nanotube composite is used as a working electrode, and a platinum wire and silver/silver chloride are used as a counter electrode and a reference electrode respectively, which are applied to a water-based magnesium ion battery with a 1 M magnesium chloride aqueous solution as the electrolyte. Through a electrochemical signal test, the water-based magnesium ion battery can have excellent cycling stability and excellent magnesium ion storage capacity.

An embodiment of the present application further provides a nickel oxyhydroxide/carbon nanotube composite, which is obtained by adopting the aforementioned method for preparing a nickel oxyhydroxide/carbon nanotube composite for a water-based magnesium ion positive electrode material, where nickel oxyhydroxide is uniformly distributed on the surface of the carbon nanotube, so as to have the nickel oxyhydroxide/carbon nanotube composite.

An embodiment of the present application further provides a water-based magnesium ion cathode material including the aforementioned nickel oxyhydroxide/carbon nanotube composite or a nickel oxyhydroxide/carbon nanotube composite prepared by the aforementioned preparation method.

An embodiment of the present application further provides a water-based magnesium ion battery, which includes the aforementioned water-based magnesium ion positive electrode material.

Further, an embodiment of the present application further provides an electrochemical energy storage device, which includes the aforementioned water-based magnesium ion positive electrode material or water-based magnesium ion battery.

The technical effects of the technical solution of the present application are as follows.
1. By adopting the technical solution of the present application, the nickel oxyhydroxide nanoparticle is synthesized on the surface of the carbon nanotube by a simple chemical bath method, so that the nickel oxyhydroxide nanoparticle is deposited on the surface of the carbon nanotube, so as to form a composite with a nickel oxyhydroxide/carbon nanotube structure, which is used as the positive electrode material of the water-based magnesium ion battery with excellent electrochemical cycling stability and magnesium ion storage capacity. In a 1 M magnesium chloride electrolyte solution, the nickel oxyhydroxide/carbon nanotube composite shows a high capacity (about 135 mAh·g⁻¹) and a flat charging and discharging platform (about 0.58 V, relative to silver/silver chloride).
2. The high-valent nickel-based compound for the water-based magnesium ion positive electrode material provided by the technical solution of the present application has the advantages of safety, environmental protection, a stable structure, a mild preparation method and simple operation.
3. Through the technical solution of the present application, the nickel-based compound is applied into the water-based magnesium ion battery, which expands the selectable range of the positive electrode materials of the water-based magnesium ion battery, and has the advantages of easily available raw materials, low price and environmental friendliness.

### BRIEF DESCRIPTION OF THE DRAWINGS

FIG. 1 is a XRD schematic diagram of a nickel oxyhydroxide/carbon nanotube composite prepared in Example 1 of the present application.
FIG. 2a is a low-power SEM photograph of the nickel oxyhydroxide/carbon nanotube composite prepared in Example 1 of the present application.
FIG. 2b is a high-power SEM photograph of the nickel oxyhydroxide/carbon nanotube composite prepared in Example 1 of the present application.
FIG. 3a is a linear cyclic voltammogram of the carbon nanotube and the nickel oxyhydroxide/carbon nanotube composite prepared in Example 1 of the present application.
FIG. 3b shows a diagram showing the charge-discharge performance of the carbon nanotube and the nickel oxyhydroxide/carbon nanotube composite prepared in Example 1 of the present application.
FIG. 4a is a diagram showing the charge-discharge performance and rate performance of the carbon nanotube and the nickel oxyhydroxide/carbon nanotube composite prepared in Example 1 of the present application in different electrolyte solutions.
FIG. 4b is a diagram showing the rate performance of the carbon nanotube and the nickel oxyhydroxide/carbon nanotube composite prepared in Example 1 of the present application in different electrolyte solutions.
FIG. 5a is a diagram showing the rate performance of the carbon nanotube and the nickel oxyhydroxide/carbon nanotube composite prepared in Example 1 of the present application in a 1M magnesium chloride solution.
FIG. 5b is a diagram showing the cycling stability of the carbon nanotube and the nickel oxyhydroxide/carbon nanotube composite prepared in Example 1 of the present application in a 1M magnesium chloride solution.

### DETAILED DESCRIPTION OF THE EMBODIMENTS

In order to make the objectives, technical solutions and advantages of the embodiments of the present application clearer, the following will clearly and completely describe the technical solutions in the embodiments of the present application, and the described embodiments are a part rather than all of the embodiments of the present application. Based on the embodiments in the present application, all others embodiments obtained by those of ordinary skills in the art without creative labor are within the claimed scope of the present application.

The present application provides a nickel oxyhydroxide/carbon nanotube composite for a water-based magnesium ion positive electrode material, and a preparation method and use thereof. A carbon nanotube is used as a substrate, and a nickel oxyhydroxide particle is grown on a surface of the carbon nanotube by a chemical bath method to prepare the nickel oxyhydroxide/carbon nanotube composite.

The chemical bath method includes: mixing nickel sulfate hexahydrate, potassium persulfate and water, and stirring at a constant speed to form a homogeneous seed layer solution; then adding ammonia water into the seed layer solution dropwise, and stirring at a constant speed until the reaction is complete, so as to obtain a precursor solution; and finally, adding the carbon nanotube into the precursor solution, stirring at a constant speed to deposit the nickel oxyhydroxide particle uniformly on the surface of the carbon nanotube, and drying after reacting for 20-30 min to obtain the nickel oxyhydroxide/carbon nanotube composite.

The technical solution of the present application will be further explained in detail through specific examples.

### Example 1

This example provided a nickel oxyhydroxide/carbon nanotube composite for a water-based magnesium ion positive electrode material, and a preparation method and use thereof, which included the following specific steps:
(1) preparation of a nickel oxyhydroxide/carbon nanotube composite electrode: a carbon nanotube was used as a substrate, and nanostructured nickel oxyhydroxide particles were grown on the surface of the carbon nanotube by a simple and mild chemical bath method.

Specifically, a proper amount of deionized water and an anhydrous ethanol solution were taken and adopted to treat the surface of the carbon nanotube, and then the carbon nanotube was placed and dried in an air blast drying oven at an oven temperature of 50°C for a time of 40 min. A proper volume of deionized water was taken, added with nickel sulfate hexahydrate with a volume concentration of 100 mg/mL and 40 mg/mL of potassium persulfate respectively at a volume ratio of 1:2, and stirred at a constant speed for 10 min to form a seed layer solution. The seed layer solution was added dropwise with 28 wt% of ammonia water with the volume ratio of the ammonia water to the seed layer solution of 1:10, and stirred at room temperature for 2 min to form a precursor solution. A proper amount of carbon nanotubes were taken and placed into the aforementioned precursor solution, and stirred at a constant speed at room temperature for 20 min. After the reaction was ended, the sample was subjected to suction filtration, placed and kept in an air blast drying oven at 50°C for 30 min to obtain the structure of the nickel oxyhydroxide/carbon nanotube composite.

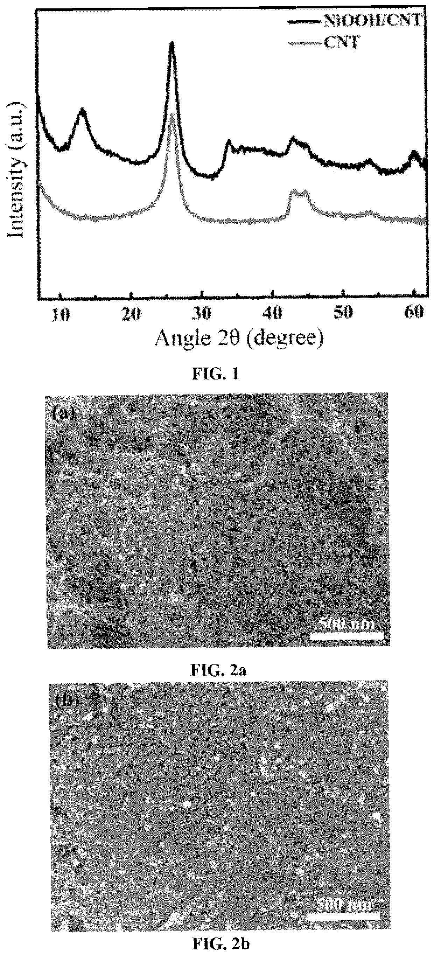

Referring to FIG. 1, which is a XRD schematic diagram of the nickel oxyhydroxide/carbon nanotube composite prepared in step (1) of this example. Compared with the XRD characteristic peaks of the carbon nanotubes, the main characteristic peaks of the nickel oxyhydroxide/carbon nanotube composite were located at 13.4°, 33.9° and 42.2°, respectively, which indicated that the nickel oxyhydroxide/carbon nanotube composite had been successfully prepared.

Referring to FIGs. 2a and 2b, which were a low-power SEM photograph (FIG. 2a) and a high-power SEM photograph (FIG. 2b) of the nickel oxyhydroxide/carbon nanotube composite prepared in step (1) of this example, wherein the nickel oxyhydroxide nanoparticles were distributed on the surface of the carbon nanotubes.

(2) Testing of the nickel oxyhydroxide/carbon nanotube composite electrode: The prepared nickel oxyhydroxide/carbon nanotube composite was used as a working electrode, a platinum wire and silver/silver chloride were used as a counter electrode and a reference electrode respectively, and a 1 M magnesium chloride aqueous solution as an electrolyte to conduct an electrochemical signal test of a three-electrode system. In the 1 M magnesium chloride aqueous solution, the capacity of the nickel oxyhydroxide/carbon nanotube composite was about 135 mAh·g⁻¹, and the discharge platform was about 0.58 V.

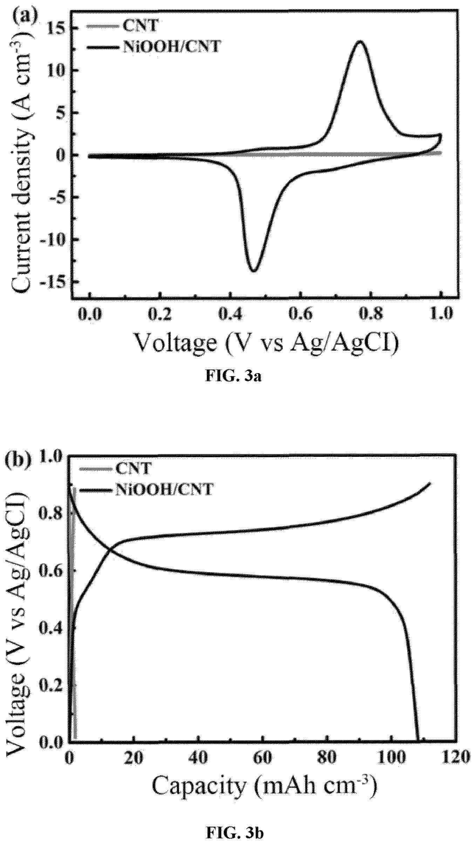

Referring to FIGs. 3a and 3b, which were respectively a linear cyclic voltammogram and a diagram showing the charge-discharge performance of the nickel oxyhydroxide/carbon nanotube composite prepared in step (1) of this example. The linear cyclic voltammogram of the nickel oxyhydroxide/carbon nanotube composite showed an obvious redox peak, which proved that the electrochemical behavior of magnesium ion intercalation/deintercalation could occur, and the diagram showing the charge-discharge performance further showed that it had high capacity and a discharge platform.

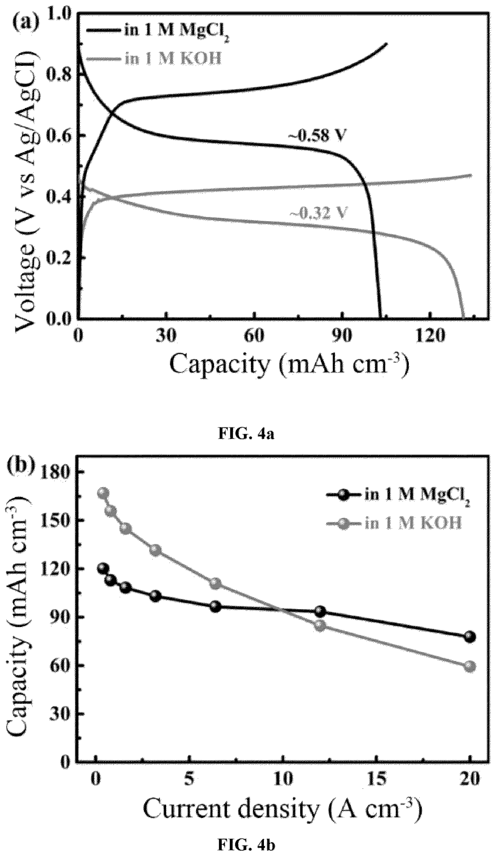

Referring to FIGs. 4a and 4b, which were respectively diagrams showing charge-discharge performance and rate performance of the nickel oxyhydroxide/carbon nanotube composite prepared in step (1) of this example in different electrolyte solutions. It could be seen from the comparison of the figures that, compared with the 1 M potassium hydroxide electrolyte solution, the nickel oxyhydroxide/carbon nanotube composite showed a higher discharge platform and excellent cycling stability in the 1 M magnesium chloride electrolyte solution.

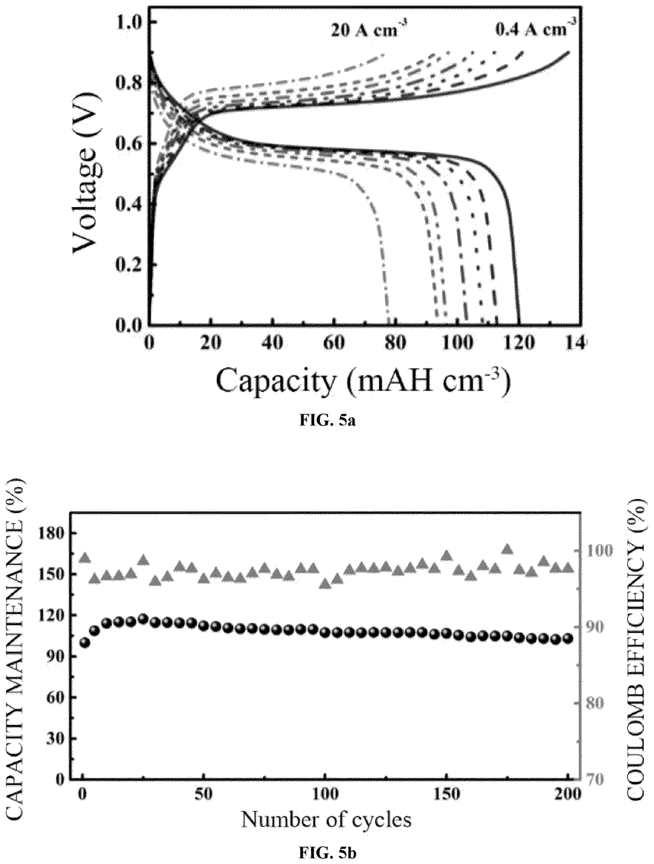

Referring to Figure 5a and Figure 5b, which were respectively diagrams showing the rate performance and cycling stability of the nickel oxyhydroxide/carbon nanotube composite prepared in step (1) of this example in a 1M magnesium chloride solution. After 200 cycles, the capacity of the nickel oxyhydroxide/carbon nanotube composite remained at about 97% of the original.

### Example 2

This example provided a method for preparing a nickel oxyhydroxide/carbon nanotube composite electrode, which included the following specific steps:
(1) preparation of a nickel oxyhydroxide/carbon nanotube composite electrode: a carbon nanotube was used as a substrate, and nanostructured nickel oxyhydroxide particles were grown on the surface of the carbon nanotube by a simple and mild chemical bath method.
   Specifically, a proper amount of deionized water and an anhydrous ethanol solution were taken and adopted to treat the surface of the carbon nanotube, and then the carbon nanotube was placed and dried in an air blast drying oven at an oven temperature of 50°C for a time of 40 min. A proper volume of deionized water was taken, added with nickel sulfate hexahydrate with a volume concentration of 100 mg/mL and 40 mg/mL of potassium persulfate respectively at a volume ratio of 1:1.5, and stirred at a constant speed for 10 min to form a seed layer solution. The seed layer solution was added dropwise with 28 wt% of ammonia water with the volume ratio of the ammonia water to the seed layer solution of 1:10, and stirred at room temperature for 2 min to form a precursor solution. A proper amount of carbon nanotubes were taken and placed into the aforementioned precursor solution, and stirred at a constant speed at room temperature for 30 min. After the reaction was ended, the sample was subjected to suction filtration, placed and kept in an air blast drying oven at 50°C for 30 min to obtain the structure of the nickel oxyhydroxide/carbon nanotube composite.
(2) Testing of the nickel oxyhydroxide/carbon nanotube composite electrode: The prepared nickel oxyhydroxide/carbon nanotube composite was used as a working electrode, a platinum wire and silver/silver chloride were used as a counter electrode and a reference electrode respectively, and a 1 M magnesium chloride aqueous solution as an electrolyte to conduct an electrochemical signal test of a three-electrode system. In the 1 M magnesium chloride aqueous solution, the capacity of the nickel oxyhydroxide/carbon nanotube composite was about 132 mAh·g⁻¹, and the discharge platform was about 0.58 V. After 200 cycles, the capacity of the nickel oxyhydroxide/carbon nanotube composite remained at about 95% of the original.

### Example 3

This example provided a method for preparing a nickel oxyhydroxide/carbon nanotube composite electrode, which included the following specific steps:
(1) preparation of a nickel oxyhydroxide/carbon nanotube electrode: a carbon nanotube was used as a substrate, and nanostructured nickel oxyhydroxide particles were grown on the surface of the carbon nanotube by a simple and mild chemical bath method.
   Specifically, a proper amount of deionized water and an anhydrous ethanol solution were taken and adopted to treat the surface of the carbon nanotube, and then the carbon nanotube was placed and dried in an air blast drying oven at an oven temperature of 50°C for a time of 40 min. A proper volume of deionized water was taken, added with nickel sulfate hexahydrate with a volume concentration of 100 mg/mL and 40 mg/mL of potassium persulfate respectively at a volume ratio of 1:2, and stirred at a constant speed for 10 min to form a seed layer solution. The seed layer solution was added dropwise with 28 wt% of ammonia water with the volume ratio of the ammonia water to the seed layer solution of 1:10, and stirred at room temperature for 2 min to form a precursor solution. A proper amount of carbon nanotubes were taken and placed into the aforementioned precursor solution, and stirred at a constant speed at room temperature for 40 min. After the reaction was ended, the sample was subjected to suction filtration, placed and kept in an air blast drying oven at 50°C for 30 min to obtain the structure of the nickel oxyhydroxide/carbon nanotube composite.
(2) Testing of the nickel oxyhydroxide/carbon nanotube composite electrode: The prepared nickel oxyhydroxide/carbon nanotube composite was used as a working electrode, a platinum wire and silver/silver chloride were used as a counter electrode and a reference electrode respectively, and a 1 M magnesium chloride aqueous solution as an electrolyte to conduct an electrochemical signal test of a three-electrode system. In the 1 M magnesium chloride aqueous solution, the capacity of the nickel oxyhydroxide/carbon nanotube composite was about 134 mAh·g⁻¹, and the discharge platform was about 0.58 V. After 200 cycles, the capacity of the nickel oxyhydroxide/carbon nanotube composite remained at about 96% of the original.

### Comparative Example

The comparative example provided a method for preparing a nickel hydroxide electrode, which included the following specific steps:
(1) preparation of a nickel hydroxide electrode: nanostructured nickel hydroxide was also grown and prepared by a simple and mild chemical bath method.
   A proper volume of deionized water was taken, added with nickel sulfate hexahydrate with a volume concentration of 100 mg/mL, and stirred at a constant speed for 10 min to form a seed layer solution. The seed layer solution was added dropwise with 28 wt% of ammonia water with the volume ratio of the ammonia water to the seed layer solution of 1:10, and stirred at room temperature for 4 h. After the reaction was ended, the sample was subjected to suction filtration, placed and kept in an air blast drying oven at 50°C for 30 min to obtain the nanostructured nickel hydroxide.
(2) Testing of a nickel hydroxide electrode: The prepared nickel hydroxide was used as a working electrode, a platinum wire and silver/silver chloride were used as a counter electrode and a reference electrode respectively, and a 1 M magnesium chloride aqueous solution as an electrolyte to conduct an electrochemical signal test of a three-electrode system. In a 1 M magnesium chloride aqueous solution, the nickel hydroxide had no chemical signal peak, which indicated that the nickel hydroxide had no electrochemical magnesium storage performance.

From the aforementioned examples, it can be seen that the nickel oxyhydroxide/carbon nanotube composite prepared in the present application has excellent electrochemical cycling stability and magnesium ion storage capacity when used as a working electrode in a water-based magnesium ion battery. In the 1 M magnesium chloride electrolyte solution, the nickel oxyhydroxide/carbon nanotube composite shows high capacity (132-135 mAh·g⁻¹) and a flat charging and discharging platform (about 0.58 V, relative to silver/silver chloride).

Through the comparison between Examples 1-3 and the comparative example, it can be seen that the nickel oxyhydroxide/carbon nanotube composite prepared by the technical solution of the present application overcomes the technical problem in the prior art that nickel hydroxide cannot be applied to a water-based magnesium ion battery as a working electrode. The results of Examples 1-3 show that the nickel oxyhydroxide/carbon nanotube composite prepared by the technical solution of the present application has excellent electrochemical cycling stability and magnesium ion storage capacity when applied to the water-based magnesium battery.

The above is only the preferred embodiments of the present application, which does not limit the claimed scope of the present application. Various modifications and variations can be made to the present application by those skilled in the art. Any change, modification, substitution, integration and parameter change of these embodiments within the spirit and principle of the present application through conventional substitution or the ability to achieve the same function without departing from the principle and spirit of the present application are within the protection scope of the present application.

## Claims

1. A method for preparing a nickel oxyhydroxide/carbon nanotube composite for a water-based magnesium ion positive electrode material, comprising: taking a carbon nanotube as a substrate, and growing a nickel oxyhydroxide particle on a surface of the carbon nanotube by a chemical bath method, so that nickel oxyhydroxide is evenly distributed on the surface of the carbon nanotube, and the nickel oxyhydroxide/carbon nanotube composite is prepared.

2. The method for preparing a nickel oxyhydroxide/carbon nanotube composite for a water-based magnesium ion positive electrode material according to claim 1, wherein a process of the chemical bath method comprises:
S1. mixing nickel sulfate hexahydrate, potassium persulfate, and deionized water, and stirring at a constant speed to form a homogeneous seed layer solution;
S2. adding ammonia water into the seed layer solution dropwise, and stirring at the constant speed until the reaction is complete, so as to obtain a precursor solution; and
S3. adding the carbon nanotube into the precursor solution, stirring at the constant speed, reacting for 20-30 min, and then drying to obtain the nickel oxyhydroxide/carbon nanotube composite.

3. The method for preparing a nickel oxyhydroxide/carbon nanotube composite for a water-based magnesium ion positive electrode material according to claim 2, wherein in the S 1, a mass ratio of the nickel sulfate hexahydrate to the potassium persulfate in the seed layer solution is (7-8):(3-4).

4. The method for preparing a nickel oxyhydroxide/carbon nanotube composite for a water-based magnesium ion positive electrode material according to claim 2, wherein in the precursor solution obtained in the S2, a concentration of the ammonia water added is 28 wt%, and a volume ratio of the ammonia water to the seed layer solution is 1:10-30.

5. The method for preparing a nickel oxyhydroxide/carbon nanotube composite for a water-based magnesium ion positive electrode material according to claim 2, wherein in the S3, after the reaction is ended, a drying process comprises placing the carbon nanotube in an air blast drying oven at 50-70°C for 30-90 min to obtain the nickel oxyhydroxide/carbon nanotube composite.

6. The method for preparing a nickel oxyhydroxide/carbon nanotube composite for a water-based magnesium ion positive electrode material according to any one of claims 1-5, wherein in the S1-S3, reaction conditions are a temperature of 25-35°C; and a rotating speed of the stirring at the constant speed of 500-1,000 rpm.

7. A nickel oxyhydroxide/carbon nanotube composite obtained by the method for preparing a nickel oxyhydroxide/carbon nanotube composite for a water-based magnesium ion positive electrode material according to any one of claims 1-6, wherein nickel oxyhydroxide is uniformly distributed on a surface of a carbon nanotube to have the nickel oxyhydroxide/carbon nanotube composite.

8. A water-based magnesium ion positive electrode material, comprising the nickel oxyhydroxide/carbon nanotube composite according to claim 7 or a nickel oxyhydroxide/carbon nanotube composite prepared by the preparation method according to any one of claims 1-6.

9. A water-based magnesium ion battery comprising the water-based magnesium ion positive electrode material according to claim 8.

10. An electrochemical energy storage device comprising the water-based magnesium ion positive electrode material according to claim 8 or the water-based magnesium ion battery according to claim 9.
